# EUROPÄISCHE PATENTSCHRIFT

(11) **EP 2 598 582 B1**
(45) Veröffentlichungstag und Bekanntmachung des Hinweises auf die Patenterteilung: **09.09.2015**
(21) Anmeldenummer: 11743989.3
(22) Anmeldetag: 20.07.2011
(51) Int. Cl.: C09D 5/00

(54) **VERFAHREN ZUR KORROSIONSHEMMENDEN BESCHICHTUNG VON METALLOBERFLÄCHEN UNTER VERWENDUNG PHOSPHORHALTIGER POLYESTER**
METHOD FOR THE CORROSION-INHIBITING COATING OF METAL SURFACES USING PHOSPHOROUS-CONTAINING POLYESTER
PROCÉDÉ DE REVÊTEMENT ANTICORROSION DE SURFACES MÉTALLIQUES UTILISANT DU POLYESTER CONTENANT DU PHOSPHORE

(30) Priorität: 29.07.2010 DE 102010032787
(43) Veröffentlichungstag der Anmeldung: 05.06.2013
(73) Patentinhaber: BASF Coatings GmbH, 48165 Münster (DE)
(72) Erfinder: BAUTISTA MESTER, Rafael, 48165 Münster (DE); STEFFENS, Alexandra, 48161 Münster (DE)
(74) Vertreter: Leifert & Steffan
(86) Internationale Anmeldenummer: PCT/EP2011/062480
(87) Internationale Veröffentlichungsnummer: WO 2012/013560

(56) Entgegenhaltungen:
- EP-A2- 0 291 260
- WO-A1-2005/000575
- WO-A1-2005/123849
- WO-A2-03/011984
- WO-A2-2005/056697
- US-A1- 2004 092 637

## Beschreibung

Die vorliegende Erfindung betrifft ein neues Verfahren zur korrosionshemmenden Beschlchtung von gereinigten und gegebenenfalls mit einem Vorbehandlungsmittel behandelten Metalloberfläohen.

Um haftfeste, korrosionshemmende Beschichtungen auf Metallbändern oder Coils, insbesondere aus den üblichen und bekannten Gebrauchsmetallen, wie Zink, Aluminium oder blanker, galvanisierter, elektroverzinkter und phosphatlerter Stahl, mit Hilfe des Coll-Coating-Verfahrens (Römpp Lexikon Lacke und Druckfarben, Georg Thieme Verlag, Stuttgart, New York, 1998, Seite 617, »Walzlackierung«, und Seite 55, »Bandbeschichtung«) zu erzielen, ist es in der Regel notwendig, die Oberfläche der Metallbänder einer Vorbehandlung zu unterziehen. Dies stellt aber im Rahmen des Coil-Coatlng-Verfahrens einen zusätzlichen Verfahrenschritt dar, auf den man aus wirtschaftlichen und technischen Gründen verzichten möchte.

Bekanntermaßen dienen Primerschichten der Haftvermittlung zwischen der Metalloberfläche und den darüber liegenden Beschichtungen. Sie können auch in gewissem Umfang zum Korrosionsschutz beitragen. Üblicherweise werden sie aus bindemittelhaltigen, pigmentierten und lösemittelhaltigen thermisch härtbaren Beschichtungsstoffen hergestellt, die entweder hinsichtlich ihrer Haftungsvermittlung oder hinsichtlich ihres Beitrags zum Korrosionsschutz optimiert sind.

Für die Herstellung korrosionshemmender Beschichtungen werden vorzugsweise phosphorhaltige Beschichtungsmittel eingesetzt. Hierbei kommen Insbesondere Beschichtungsmittel enthaltend Bindemittel und/oder Additive mit Phosphor- oder Phosphonsäuregruppen zum Einsatz, da diese einen besonders guten Korrosionsschutz auf unbehandelten bzw. unzureichend vorbehandelten Metalloberflächen gewährleisten.

WO 02/24973 A2 beschreibt Additive für Beschichtungsmittel, die zur Phosphatierung von Metalloberflächen dienen, welche Glycerinphosphat enthalten. Die Phosphatierungsmittel gemäß WO 02/24973 A2 enthalten kein Bindemittel und sind somit als Haftvermittler zwischen Metallsubstrat und darüber liegenden Schichten nur sehr bedingt geeignet. In der Regel werden solchermaßen phosphatierte Metalloberflächen zur Haftvermittlung mit einer separaten Primerschicht überschichtet bevor der Decklack appliziert wird.

In WO 2005/000575 A1 werden Vorbehandlungsmittel für spezifische oxidierte Metalloberflächen beschrieben, welche insbesondere für die Immobilisierung von biologisch aktiven Materialien zum Einsatz kommen, die niedermolekulare saure Phosphorsäureester HO₂PORiOR₂ oder Phosphonsäureester HO₂PR₁OR₂ enthalten, bei welchen die Estergruppen R₁ und/oder R₂ aliphatische oder aromatische Einheiten mit 2 bis 40 Kohlenstoffatomen sein können, die ihrerseits noch weitere funktionelle Gruppen tragen können. Die Vorbehandlungsmittel gemäß WO 2005/000575 A1 enthalten kein Bindemittel und sind somit als Haftvermittler zwischen Metallsubstrat und darüber liegenden Schichten nur sehr bedingt geeignet.

WO 2005/056697 A1 beschreibt strahlenhärtbare Beschichtungsmittel, welche saure Ester der Mono- oder Polyphosphorsäure enthalten, deren Esterreste strahlenhärtbare Gruppen aufweisen. Diese Beschichtungsmittel werden bevorzugt als Primer in Coil-Coating-Beschichtungen eingesetzt und weisen eine gute Substrat- und Zwischenschichthaftung auf. Von Nachteil bei diesen Beschichtungsmitteln ist, daß an der Coil-Beschichtungslinie Quellen für aktinische Strahlung vorhanden sein müssen und daß im Coil-Coating-Verfahren die Bandgeschwindigkeit auf die Leistung dieser Strahlenquellen aufwendig abgestimmt werden muß

In WO 2007/020220 A1 werden thermisch härtbare Primer für Coil-Coating-Beschichtungen beschrieben, die ein Korrosionsinhibitorpolymer enthalten, welches als Comonomereinheiten ethylenisch ungesättigte Monomere mit Phosphonsäure- oder Phosphorsäuregruppen enthalten kann. Diese Beschichtungsmittel weisen gute Korrosionsschutzeigenschaften und Substrathaftung auf, die oben genannten Korrosionsinhibitorpolymerisate sind allerdings nur aufwendig herstellbar.

In WO 2008/017647 A1 werden thermisch härtbare Primer für Coil-Coating-Beschichtungen beschrieben, die ein Phosphinsäurederivat als Korrosionsinhibitorkomponente enthalten, wobei das Phosphinsäurederivat HO₂PR₁R₂ Alkylreste R₁ und/oder R₂ mit 1 bis 30 Kohlenstoffatomen aufweisen kann, welche mit Hydroxylgruppen funktionalisiert sein können. Diese Beschichtungsmittel weisen gute Korrosionsschutzeigenschaften und Substrathaftung auf, die oben genannten Korrosionsinhibitorpolymerisate sind allerdings nur aufwendig herstellbar.

### Aufgabe und Lösung

Aufgabe der vorliegenden Erfindung war es entsprechend, einen neuen, thermisch härtbaren Beschichtungsstoff und ein Verfahren zu dessen Applikation bereitzustellen, welches insbesondere beim Einsatz des Beschichtungsstoffes als Primer im Coil-Coating-Verfahren die Nachteile des Standes der Technik nicht mehr länger aufweist, sondern zu einer guten Substrathaftung und einem guten Korrosionsschutz verbunden mit einer guten Zwischenschichthaftung führt. Weiterhin sollten der verfahrensgemäß eingesetzte Primer und insbesondere die korrosionsinhibierende Komponente sich leicht herstellen lassen, lagerstabil sein und sich besonders leicht und problemlos insbesondere Im Rahmen des Coil-Coating-Verfahrens applizieren lassen.
Das neue Verfahren sollte speziell zu Primerlackierungen führen, die auch auf nicht vorbehandelten Metalloberflächen eine besonders hohe Haftung in Kombination mit einem guten Korrosionsschutz, Insbesondere auf der Oberfläche von Gebrauchsmetallen, wie Zink, Aluminium oder blankem, galvanisiertem, elektroverzinktem und phosphatiertem Stahl, verbunden mit einer besonders hohen Zwischenschichthaftung zu den darüber liegenden Beschichtungen, die eine hervorragende Korrosionsschutzwirkung auch im Schichtverbund, insbesondere gegen Weißkorroslon, und die eine hohe Elastizität auch in dünnen Schichten aufweisen.

Demgemäß wurde ein Verfahren zur korrosionshemmenden Beschichtung von Metalloberflächen gefunden, bei dem in einem ersten Schritt (1) die Metalloberfläche gereinigt wird und gegebenenfalls mit einem Vorbehandlungsmittel behandelt wird und In einem zweiten Schritt (2) die gemäß Schritt (1) gereinigte und gegebenenfalls vorbehandelte Metalloberfläche mit einem Primer (P) beschichtet wird, enthaltend mindestens ein Bindemittel (BM) und mindestens ein Vernetzungsmittel (V), sowie eine korroslonsinhibierende Komponente (A), wobei (A) ein saures Veresterungsprodukt von Phosphonsäure, Monophosphorsäure und/oder Polyphosphorsäure, Insbesondere Polyphosphorsäura, beziehungsweise von deren Anhydriden und/oder von deren Estern, mit mindestens einem Polyester (B), der mindestens zwei Hydroxylgruppen aufweist, ist, und die Trocknung und/oder Aushärtung des Primers bei auf dem Metall vorgefundenen Spitzentemperaturen (Peak metal temperature (PMT)) von mindestens 80°C durchgeführt wird.

Im Hinblick auf den Stand der Technik war es überraschend und für den Fachmann nicht vorhersehbar, dass die Aufgabe, die der vorliegenden Erfindung zugrunde lag, mit Hilfe des erfindungsgemäßen Verfahrens gelöst werden konnte.

Insbesondere wiesen die mit dem erfindungsgemäßen Verfahren hergestellten Primerschichten eine besonders hohe Substrathaftung und Korrosionsschutzwirkung, insbesondere auf der Oberfläche von Gebrauchsmetallen, wie Zink, Aluminium oder blankem, galvanisiertem, elektroverzinktem und phosphatiertem Stahl, in Verbindung mit einer besonders hohen Zwischenschichthaftung zu den darüber liegenden Beschichtungen, eine hervorragende Korrosionsschutzwirkung auch im Schichtverbund, insbesondere gegen Weißkorrosion, und eine hohe Elastizität auf.

### Beschreibung der Erfindung

### Die korrosionsinhibierende Komponente (A)

Der im erfindungsgemäßen Verfahren eingesetzte Primer (P) enthält mindestens eine phosphorhaltige korrosionsinhibierende Komponente (A), wobei (A) ein saures Veresterungsprodukt von Phosphonsäure, Phosphorsäure und/oder Polyphosphorsäure, insbesondere Polyphosphorsäure, beziehungsweise von deren Anhydriden und/oder von deren Estern, mit mindestens einem Polyester (B) ist, welcher mindestens zwei Hydroxylgruppen aufweist.

Die bevorzugt eingesetzte Polyphosphorsäure enthält einen rechnerischen Gehalt an Diphosphorsäure, der vorzugsweise 70 bis 95 Gew.-%, bevorzugt 70 bis 90 Gew.-% und insbesondere 75 bis 86 Gew.-% beträgt. Vorzugsweise enthält die phosphorhaltige Komponente (A), bezogen auf ihre Gesamtmenge, 1 bis 20 Gew.-% und insbesondere 2 bis 15 Gew.-% Phosphor.

Bei den für die Synthese der korrosionsinhibierenden Komponente (A) geeigneten vorzugsweise linearen Polyestern (B) handelt es sich insbesondere um Kondensate niedermolekularer Dicarbonsäuren und Dialkohole.

Beispiele geeigneter Dicarbonsäuren umfassen aliphatische Dicarbonsäuren wie Bernsteinsäure, Glutarsäure, Adipinsäure, Azelainsäure, Sebacinsäure, Dodecandisäure, aliphatische Dicarbonsäuren wie beispielsweise Dimerfettsäuren, d.h. Umsetzungsprodukte ungesättigter Fettsäuren miteinander, cycloaliphatische Dicarbonsäuren wie 1,4- oder 1,3 Cyclohexandicarbonsäure, Tricyclodecandicarbonsäure und aromatische Dicarbonsäuren wie Isophthalsäure, Terephthalsäure oder Phthalsäure. Es können selbstverständlich auch Derivate von Dicarbonsäuren, wie besipielsweise Ester und/oder Anydride von Carbonsäuren eingesetzt werden. Besonders geeignet sind die oben genannten aliphatischen Dicarbonsäuren oder deren Gemische. Ganz besonders bevorzugt sind Dicarbonsäuren, die in α- und in w-Stellung an der längsten Kohlenstoffkette Carboxylgruppen, wie Azelainsäure, Sebacinsäure, sowie insbesondere Bernsteinsäure, Glutarsäure und Adipinsäure, oder deren Gemische. Beispiele geeigneter Dialkohole umfassen aliphatische Dialkohole wie zum Beispiel Ethylenglykol, Diethylenglykol, Triethylenglykol, Propylenglykol, 1,3-Butandiol, 1,3-Propandiol, 1,4-Butandiol, 1,6-Hexandiol, 1,8-Octandiol, Neopentylglykol, 1-Methylpropandiol-1,3, 2-Butyl-2-ethylpropandiol, Pentandiole, Hexandiole, Octandiole, Dodecandiol, Hydroxypivalinsäureneopentylglykolester, cycloaliphatische Alkohole wie 1,4- oder 1,3 -Cyclohexandimethanol, TCD-Alkohol und Bis(4-hydroxycyclohexyl)methan bzw. -propan und Dimerdiole (hydrierte Dimerfettsäuren). Es können selbstverständlich in bekannter Art und Weise auch Derivate von Alkoholen eingesetzt werden, wie beispielsweise Ester, insbesondere die entsprechenden Methyl- oder Ethylester. Besonders geeignet sind aliphatische Dialkohole, die in α- und in w-Stellung an der längsten Kohlenstoffkette Hydroxylgruppen aufweisen, wie Ethylenglykol, 1,4-Butandiol sowie insbesondere 1,6-Hexandiol, 1,4-Cyclohexandimethanol oder deren Gemische.

Neben linearen Polyestern (B) können auch verzweigte Polyester (B) eingesetzt werden. Geeignete Monomere zur Erzeugung von Verzweigungen umfassen Tricarbonsäuren oder deren Anhydride wie Trimelithsäureanhydrid oder Trimesinsäure und Trialkohole wie Trimethylolalkane beispielsweise Trimethylolethan oder Trimethylolpropan.
Die OH-Zahl (OHZ) nach DIN 53240 der als Komponente (B) eingesetzten Polyester beträgt in der Regel etwa 50 bis 500 mg KOH/g, bevorzugt 100 bis 450 mg KOH/g, besonders bevorzugt 150 bis 400 mg KOH/g.
Die Säurezahl (SZ) nach DIN 53402 der als Komponente (B) eingesetzten Polyester beträgt in der Regel weniger als 20 mg KOH/g, bevorzugt weniger als 10 mg KOH/g, besonders bevorzugt weniger als 5 mg KOH/g.
Die zahlenmittleren Molekulargewichte Mn nach der als Komponente (B) eingesetzten Polyester betragen üblicherweise 200 bis 2000 g/mol, bevorzugt 250 bis 1500 g/mol und besonders bevorzugt 300 bis 1000 g/mol. Die zahlenmittleren Molekulargewichte Mn lassen sich durch kolligative Verfahren wie beispielsweise. Kryoskopie, Membran- oder Dampfdruckosmometrie bestimmen und werden bevorzugt- sofern die Anzahl der Endgruppen pro Molekül bekannt ist - durch Endgruppenbestimmung ermittelt.

Bevorzugt wird die korrosionsinhibierende Komponente (A) durch Veresterung der Phosphonsäure, Phosphorsäure und/oder Polyphosphorsäure, insbesondere Polyphosphorsäure, beziehungsweise von deren Anhydriden und/oder von deren Estern, mit dem Polyester (B) solchermaßen hergestellt, daß das Veresterungsprodukt noch freie Säuregruppen aufweist. Ganz besonders bevorzugt wird die oben genannte Polyphosphorsäure eingesetzt, oder deren Anhydrid, wobei die Komponente (B) bevorzugt in einem Molverhältnis von 1:3 bis 3:1, bezogen auf die Phosphateinheiten, insbesondere in einem Molverhältnis von 1:2 bis 2:1, eingesetzt wird.

Die korrosionsinhibierende Komponente (A) ist im Primer (P) bevorzugt in Anteilen von 1 Gew.-% bis 25 Gew.-%, bezogen auf den Feststoffgehalt des Primers (P), enthalten, insbesondere in Anteilen von 2 Gew.-% bis 20 Gew.-%.

### Die weiteren Bestandteile des Primers (P)

### Das Bindemittel (BM) im Primer (P)

Die Bindemittelkomponente kann aus einem oder mehreren Bindemitteln (BM) bestehen. Generell ist dem Fachmann bekannt, welche Bindemittel (BM) geeignet sind. Insbesondere für den Einsatz beim Coil-Coating geeignete Bindemittel (BM) sind, wie in beispielsweise WO 2007/020220 A1 beschrieben, (Meth)acrylat(co)polymerisate, partiell verseifte Polyvinylester, Polyester, Alkydharze, Polylactone, Polycarbonate, Polyether, Epoxyharze, welche auch flüssig sein können oder flüssige Bestandteile enthalten können, Epoxidharz-Amin-Addukte, Polyharnstoffe, Polyamide, Polyimide oder Polyurethane. Selbstverständlich können auch Mischungen verschiedener Bindemittel (BM) eingesetzt werden, vorausgesetzt, es treten durch die Mischung keine unerwünschten Effekte auf.
Bevorzugt werden Polyester als Bindemittel (BM) eingesetzt. Bei geeigneten Polyestern handelt es sich insbesondere um Kondensate niedermolekularer Dicarbonsäuren und Dialkohole. Beispiele geeigneter Dicarbonsäuren umfassen aliphatische Dicarbonsäuren wie Adipinsäure, Azelainsäure, Sebacinsäure, Dodecandisäure, aliphatische Dicarbonsäuren wie beispielsweise Dimerfettsäuren, d.h. Umsetzungsprodukte ungesättigter Fettsäuren miteinander, cycloaliphatische Dicarbonsäuren wie 1,4- oder 1,3 Cyclohexandicarbonsäure, Tricyclodecandicarbonsäure und aromatische Dicarbonsäuren wie Isophthalsäure, Terephthalsäure oder Phthalsäure. Es können selbstverständlich auch Derivate von Dicarbonsäuren eingesetzt werden. Besonders geeignet sind Anhydride wie beispielsweise Phthalsäureanhydrid, Hexahydrophthalsäureanhydrid oder Tetrahydrophthalsäureanhydrid.
Beispiele geeigneter Dialkohole umfassen aliphatische Alkohole wie zum Beispiel Ethylenglykol, Diethylenglykol, Triethylenglykol, Propylenglykol, 1,3-Butandiol, 1,3-Propandiol, 1,4-Butandiol, Neopentylglykol, 1-Methylpropandiol-1,3, 2-Butyl-2-ethylpropandiol, Pentandiole, Hexandiole, Octandiole, Dodecandiol, Hydroxy-pivalinsäureneopentylglykolester, cycloaliphatische Alkohole wie 1,4- oder 1,3 -Cyclohexandimethanol, TCD-Alkohol und Bis(4-hydroxycyclohexyl)methan bzw. -propan und Dimerdiole (hydrierte Dimerfettsäuren). Es können selbstverständlich in bekannter Art und Weise auch Derivate von Alkoholen eingesetzt werden, wie beispielsweise Ester, insbesondere die entsprechenden Methyl- oder Ethylester.
Neben linearen Polyester-Bindemitteln (BM) können auch verzweigte Polyester-Bindemittel (BM) eingesetzt werden. Geeignete Monomere zur Erzeugung von Verzweigungen umfassen Tricarbonsäuren oder deren Anhydride wie Trimelithsäureanhydrid oder Trimesinsäure und Trialkohole wie Trimethylolalkane beispielsweise Trimethylolethan oder Trimethylolpropan.
Die OH-Zahl (OHZ) der als Bindemittel (BM) eingesetzten Polyester beträgt in der Regel etwa 5 bis 200 mg KOH/g, bevorzugt 10 bis 120 mg KOH/g, besonders bevorzugt 12 bis 80 mg KOH/g und beispielsweise ca. 20 mg KOH/g. Die zahlenmittleren Molekulargewichte Mn der als Bindemittel (BM) eingesetzten Polyester betragen üblicherweise 500 bis 10000 g/mol, bevorzugt 1000 bis 8000 g/mol und besonders bevorzugt 2000 bis 6000 g/mol.
Das bevorzugte Bindemittel ist ein Polykondensat eines Gemischs aromatischer Disäuren wie Isophtalsäure, ortho-Phtalsäure und Terephthalsäure und aliphatischer Diole wie Ethylenglykol, Di- und/oder Polyethylenglykol und Neopentylglykol.

Der erfindungsgemäße Primer enthält 15 bis 60 Gew.-%, bevorzugt 20 bis 50 Gew.-%, des Bindemittels (BM), bezogen auf den Feststoffgehalt des Primers (P). Insbesondere für das Coil-Coating-Verfahren sind 30 bis 45 Gew.-% Anteil an Bindemittel (BM), bezogen auf den Feststoffgehalt des Primers (P), geeignet.

Das Vernetzungsmittel (V) und die weiteren Komponenten im Primer (P) Vernetzungsmittel (V) für die thermische Vernetzung der vorgenannten Polymerisate sind dem Fachmann bekannt.
Für die Vernetzung der bevorzugten hydroxygruppenhaltigen Polymerisate werden als Vernetzungsmittel (V) bevorzugt Melaminharze und/oder Aminoplastharze eingesetzt. Ganz besonders bevorzugt für die Vernetzung der bevorzugten hydroxygruppenhaltigen Polymerisate sind Melaminderivate, wie Hexabutoxymethylmelamin und insbesondere das hochreaktive Hexamethoxymethylmelamin, und/oder gegebenenfalls modifizierte Aminoplastharze. Derartige Vernetzungsmittel (V) sind kommerziell erhältlich (beispielsweise als Luwipal® der BASF AG).
Als Vernetzungsmittel (V) für die bevorzugten hydroxygruppenhaltigen Polymerisate können weiterhin gegebenenfalls blockierte Polyisocyanate, insbesondere Oligomere von Diisocyanaten, wie Trimethylendiisocyanat, Tetramethylendiisocyanat, Pentamethylendiisocyanat, Hexamethylendiisocyanat, Heptamethylendiisocyanat, Ethylethylendiisocyanat, Trimethylhexandiisocyanat oder acyclische aliphatische Diisocyanate, die eine cyclische Gruppen in ihrer Kohlenstoffkette enthalten, wie Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, eingesetzt werden. Letztere sind im Rahmen der vorliegenden Erfindung aufgrund ihrer beiden ausschließlich an Alkylgruppen gebundenen Isocyanatgruppen trotz ihrer cyclischen Gruppen zu den acyclischen aliphatischen Diisocyanaten zu zählen. Von den obengenannten Diisocyanaten wird Hexamethylendiisocyanat besonders bevorzugt eingesetzt. Bevorzugt werden Oligomere verwendet, die Isocyanurat-, Hamstoff-, Urethan-, Biuret-, Uretdion-, Iminooxadiazindion, Carbodiimid- und/oder Allophanatgruppen enthalten. Bei der Blockierung der Polyisocyanate wird die Isocyanatgruppe mit einem Blockierungsmittel umgesetzt, welches beim Erhitzen auf höhere Temperaturen wieder abgespalten wird. Beispiele geeigneter Blockierungsmittel sind beispielsweise in DE-A-199 14 896, Spalten 12 und 13, beschrieben.
Zur Beschleunigung der Vernetzung werden vorzugsweise in bekannter Weise geeignete Katalysatoren zugesetzt.
Bezogen auf die nichtflüchtigen Anteile im Bindemittel (BM) beträgt der Anteil der Vernetzungsmittel (V) bevorzugt zwischen 5 und 60 Gew.-%, besonders bevorzugt zwischen 10 und 50 Gew.-%, bezogen auf das Bindemittel (BM).

Der Primer (P) enthält weiterhin vorzugsweise anorganische Füllstoffe und/oder anorganische farb- und/oder effektgebende Pigmente und/oder Leitfähigkeitspigmente. Pigmente und Füllstoffe sind beispielsweise in WO 2007/020220 A1 beschrieben.
Klassische Füllstoffe, die insbesondere zum Ausgleich von Unebenheiten des Substrats und/oder zur Erhöhung der Schlagfestigkeit der aus dem Primer (P) hergestellten Schicht dienen, sind vorzugsweise Kreide, Hydroxide wie Aluminium- oder Magnesiumhydroxide sowie Schichtsilikate wie Talkum oder Kaolin, wobei Talkum besonders bevorzugt ist.
Als farb- und/oder effektgebende Pigmente werden vorzugsweise anorganische Pigmente, wie insbesondere Weißpigmente und Schwarzpigmente eingesetzt. Bevorzugte Weißpigmente sind Siliciumoxide, Aluminiumoxide und insbesondere Titanoxide sowie Bariumsulfat. Bevorzugte Schwarzpigmente sind Eisenoxide und insbesondere Graphit und Ruße.
Als Leitfähigkeitspigmente werden vorzugsweise Phosphide, Vanadiumcarbid, Titannitrid und Molybdänsulfid eingesetzt. Derartige Zusätze dienen beispielsweise der Verbesserung der Schweißbarkeit der gebildeten Beschichtung. Bevorzugt als Leitfähigkeitpigmente werden Metallphosphide von Zn, Al, Si, Mn, Cr, Ni oder insbesondere Fe eingesetzt, wie beispielsweise in WO 03/062327 A1 beschrieben. Besonders bevorzugt wird Zinkstaub als Leitfähigkeitspigment eingesetzt.
Die im Primer (P) enthaltenen Füllstoffe weisen vorzugsweise mittlere Partikeldurchmesser auf, die die Dicke der gehärteten integrierten Vorbehandlungsschicht nicht überschreiten. Bevorzugt liegt die Oberkorngrenze der Füllstoffe gemessen nach EN ISO 1524:2002 bei weniger als 15 µm, besonders bevorzugt bei weniger als 12 µm und insbesondere bei weniger als 10 µm.
Der erfindungsgemäß eingesetzte Primer (P) enthält vorzugsweise 10 bis 80 Gew.-%, besonders bevorzugt 15 bis 70 Gew.-% und insbesondere 20 bis 60 Gew.-%, bezogen auf die nichtflüchtigen Bestandteile des Primers (P), an Füllstoffen.

Neben der erfindungsgemäßen phosphorhaltigen korrosionsinhibierenden Komponente (A) kann der Primer (P) vorzugsweise anorganische Korrosionsschutzpigmente, wie insbesondere Aluminiumphosphat, Zinkphosphat, Zinkaluminiumphosphat, Molybdänoxid, Zinkmolybdat, Calciumzinkmolybdat, Zinkmetaborat oder Bariummetaborat-Monohydrat, enthalten. In einer besonders bevorzugten Ausführungsform der Erfindung werden solche Korrosionsschutzpigmente in Kombination mit amorphem Siliciumdioxid, das mit Metallionen modifiziert ist, eingesetzt. Vorzugsweise werden die Metallionen aus der Gruppe, bestehend aus Alkalimetallionen, Erdalkalimetallionen, Lanthanidmetallionen sowie Zink- und Aluminiumionen ausgewählt, wobei Calciumionen besonders bevorzugt sind. Mit Calciumionen modifiziertes amorphes Siliciumdioxid kann als handelsübliches Produkt unter der Marke Shieldex® (Fa. Grace GmbH & Co. KG) erworben werden. Desweiteren können als Bestandteil der Korrosionsschutzpigment-Zubereitungen noch dimere, oligomere oder polymere Alkoxide von Aluminium oder Titan gegebenenfalls als Addukte mit phosphorhaltigen Verbindungen, wie in WO 03/062328 A1 beschrieben, eingesetzt werden. Die Korrosionsschutzpigmente weisen vorzugsweise mittlere Partikeldurchmesser auf, die die Dicke der gehärteten integrierten Vorbehandlungsschicht nicht überschreiten. Bevorzugt liegt die Oberkomgrenze der Korrosionsschutzpigmente gemessen nach EN ISO 1524:2002 bei weniger als 15 µm, besonders bevorzugt bei weniger als 12 µm und insbesondere bei weniger als 10 µm.
Weiterhin können anstelle der oder neben den obengenannten anorganischen Korrosionsschutzpigmenten noch organische vorzugsweise niedermolekulare und/oder gegebenenfalls polymere Korrosionsschutzmittel als zusätzliche Korrosionsschutzkomponenten anwesend sein. Besonders bevorzugt sind Dicarbonsäuregemische, insbesondere Alkandicarbonsäuregemische, vorzugsweise aus C4-, C5- und C6-Dicarbonsäuren (beipielsweise Sokolan DCS der Fa. BASF SE).

Die Menge der Lösemittel im Primer (P) wird vom Fachmann je nach den gewünschten Eigenschaften der erfindungsgemäßen Zusammensetzung und der gewünschten Applikationsmethode gewählt. Die Zusammensetzung kann auch zunächst als Konzentrat hergestellt und erst vor Ort auf die gewünschte Konzentration verdünnt werden.
Der Fachmann trifft unter den prinzipiell möglichen Lösemitteln je nach Prozessbedingungen und der Art der eingesetzten Komponenten eine geeignete Auswahl. Beispiele organischer Lösemittel, die mit Wasser verträglich sein können, umfassen Ether, Polyether, wie Polyethylenglykol, Etheralkohole, wie Butylglykol oder Methoxypropanol, Etherglykolacetate, wie Butylglykolacetat, Methoxyisopropylacetat, Ketone, wie Aceton, Methylethylketon, Alkohole, wie Methanol, Ethanol, Propanol und Diacetonalkohol, organische Carbonate, wie Propylencarbonat. Weiterhin werden hydrophobe Lösemittel, wie insbesondere Benzin- und Aromatenschnitte, verwendet, wobei solche Lösemittel eher als Additive zur Steuerung spezifischer Lackeigenschaften eingesetzt werden.
Die Menge der flüchtigen Bestandteile (BL) im Beschichtungsmittel (B) kann weit variieren, wobei das Verhältnis von flüchtigen Bestandteilen (BL) zu nichtflüchtigen Bestandteilen des Beschichtungsmittels (B) in der Regel zwischen 10:1 und 1:10, vorzugsweise zwischen 5:1 und 1:5, besonders bevorzugt zwischen 4:1 und 1:4 liegt.
Der Gewichtsanteil der flüchtigen Bestandteile (BL) beträgt, bezogen auf das Gesamtgewicht des Primers (P),15 bis 80 Gew.-%, vorzugsweise 20 bis 70 Gew.-%, besonders bevorzugt 30 bis 60 Gew-%.

Der Primer (P) kann weiterhin einen oder mehrere Hilfsstoffe und/oder Additive umfassen. Derartige Hilfsstoffe und/oder Additive dienen zur Feinsteuerung der Eigenschaften der Schicht. Ihre Menge übersteigt im Regelfall nicht 30 Gew.-% bezogen auf das Gesamtgewicht des Primers (P), vorzugsweise übersteigt der Anteil nicht 20 Gew.-%.
Beispiele geeigneter Zusatzstoffe sind Farb- und/oder effektgebende Pigmente, Reaktivverdünner für die thermische Härtung oder die Härtung mit aktinischer Strahlung, Rheologiehilfsmittel, UV-Absorber, Lichtschutzmittel, Radikalfänger, Initiatoren für die radikalische Polymerisation, Katalysatoren für die thermische Vernetzung, Photoinitiatoren und -coinitiatoren, Slip-Additive, Polymerisationsinhibitoren, Entschäumer, Emulgatoren, Entgasungsmittel, Netz- und Dispergiermittel, Haftvermittler, Verlaufsmittel, filmbildende Hilfsmittel, rheologiesteuemde Additive (Verdicker), Flammschutzmittel, Sikkative, Hautverhinderungsmittel, sonstige Korrosionsinhibitoren, Wachse und Mattierungsmittel, wie sie auch aus dem Lehrbuch "Lackadditive" von Johan Bieleman, Wiley-VCH, Weinheim, New York, 1998 oder der deutschen Patentanmeldung DE-A 199 14 896, Spalte 13, Zeile 56 bis Spalte 15, Zeile 54, bekannt sind.
Geeignete sonstige Korrosionsinhibitoren, die in der Regel zusätzlich zur phosphorhaltigen korrosionsinhibierenden Komponente (A) eingesetzt werden, sind beispielsweise in WO 2007/020220 A1 beschrieben und können aus der Gruppe der Phosphonsäuren, Aminophosphonate, organischen und anorganischen Phosphate, beispielsweise des Zinks, Calciums und Magnesiums, Vinylphosphonsäuren und ihre Salze, Carbonsäuren und ihre Salze und Ester, Alkanolamine und Amine, Benzotriazole und seine strukturellen Abkömmlinge wie beispielsweise Tolytriazol, Acetylenabkömmlinge, wie beispielsweise N,N-Dimethyl-2-propin-1-amin, N,N-Diethyl-2-propin-1-amin, 1,1-Dimethyl-2-propinyl-1-amin, N,N-Diethyl-4-amino-2-butin-1-ol, 2,5-Dimethyl-3-hexin-2,5-diol, 3-Hexin-2,5-diol, 2-Butin-1,4-diolethoxylat, 2-Butin-1,4-diol, 2-Butin-1,4-diolpropoxylat, Propargylalkohol, Propargylalkoholethoxylat, Propargylalkoholpropoxylat, Propinsulfonsäure und ihre Salze, Aldehyde, Amin- und Natrium- neutralisierte Phosphorsäureester von Alkylalkoholen, Amincarboxylate, Amino- und Nitrophenole, Aminoalkohole, Aminobenzimidazol, Aminoimidazoline, Aminotriazol, Benzimidazolamine, Benzothiazole, Borsäureester mit verschiedenen Alkanolaminen wie beispielsweise Borsäurediethanolaminester, Butindiol, Chinolinderivate, Dibenzylsulfoxid, Dicarbonsäuren und ihre Ester, Diisobutenylbernsteinsäure, Dithiophosphonsäure, Fettamine und Fettsäureamide, Guanidinderivate, Harnstoff und seine Derivate, Laurylpyridiniumchlorid, Maleinsäureamide, Mercaptobenzimidazol, N-2-Ethylhexyl-3-aminosulfopropionsäure, Phosphoniumsalze, Phthalsäureamide, Polyetheramine, Sulfoniumsalze, Sulfonsäuren wie beispielsweise Methansulfonsäure, Thioether, Thioharnstoffe, Thiuramdisulfide, Zimtsäure und ihre Derivate, ausgewählt sein.

Das Beschichtungsmittel (B) wird durch intensives Mischen der Komponenten mit den Lösemitteln hergestellt. Dem Fachmann sind geeignete Misch- und Dispergieraggregate bekannt.

### Die Applikation und Konditionierung des erfindungsgemäßen Primers (P) sowie der Folgeschichten

In Schritt (1) des erfindungsgemäßen Verfahrens wird die zu beschichtende Metalloberfläche gereinigt und gegebenenfalls mit einem Vorbehandlungsmittel beschichtet. Erfolgt der Verfahrensschritt (1) unmittelbar nach einer metallischen Oberflächenbehandlung, beispielsweise einer elektrolytischen Verzinkung oder einer Schmelztauchverzinkung der Metalloberfläche, so kann der Primer (P) in der Regel ohne Vorreinigung auf das Metallband aufgetragen werden. Werden die zu beschichtenden Metallbänder vor der Beschichtung mit dem Primer (P) gelagert und/oder transportiert, so sind dieselben in der Regel mit Korrosionsschutzölen beschichtet oder auch anderweitig verschmutzt, so daß vor dem Verfahrensschritt (1) eine Reinigung des Metallbands notwendig ist. Die Reinigung kann nach dem Fachmann bekannten Methoden mit üblichen Reinigungsmitteln erfolgen. Das Auftragen des Primers (P) auf das Metallband kann durch Aufsprühen, Aufgießen oder vorzugsweise Aufwalzen erfolgen.
Beim bevorzugten Walzlackieren taucht die sich drehende Aufnahmewalze (Pick-up-Walze) in einen Vorrat des Primers (P) und übernimmt so den zu applizierenden Primer (P). Dieser wird von der Aufnahmewalze direkt oder über mindestens eine Übertragungswalze auf die sich drehende Applikationswalze übertragen. Von dieser aus wird der Primer (P) durch gleichgerichtetes oder gegenläufiges Abstreifen auf das Metallband übertragen. Erfindungsgemäß ist das gegenläufige Abstreifen oder das "Reverse-Roller-Coating-Verfahren" von Vorteil und wird bevorzugt angewandt. Vorzugsweise hat die Applikationswalze eine Umlaufgeschwindigkeit, die 110 bis 125 % der Bandgeschwindigkeit beträgt, und die Aufnahmewalze eine Umlaufgeschwindigkeit, die 20 bis 40 % der Bandgeschwindigkeit beträgt. Der Primer (P) kann aber auch direkt in einen Spalt zwischen zwei Walzen gepumpt werden, was auch als "Nip-Feed-Verfahren" bezeichnet wird.

Die Geschwindigkeit des Metallbands wird vom Fachmann entsprechend den Trocknungs- und/oder Aushärtebedingungen für den Primer (P) in Schritt (2) gewählt. in der Regel haben sich Bandlaufgeschwindigkeiten 10 bis 200 m/min, bevorzugt 12 bis 160 m/min, besonders bevorzugt 14 bis 140 m/min, bewährt.
Zur Trocknung der aus dem Primer (P) gebildeten Schicht auf dem Metallband, das heißt zur Entfernung der flüchtigen Bestandteile des Primers (P), wird das gemäß Schritt (1) beschichtete Metallband mittels einer geeigneten Vorrichtung erwärmt. Die Erwärmung kann durch Konvektionswärmeübertragung, Bestrahlen mit naher oder ferner Infrarotstrahlung und/oder bei geeigneten Metallsubstraten, Insbesondere Eisen, durch elektrische Induktion erfolgen. Die Entfernung des Lösemittels kann auch durch Kontaktieren mit einem Gasstrom erfolgen, wobei eine Kombination mit der vorstehend beschriebenen Erwärmung möglich ist.

Die Trocknung und/oder Aushärtung des Primers (P) wird erfindungsgemäß bei auf dem Metall vorgefundenen Spitzentemperaturen (Peak metal temperature (PMT), welche beispielsweise durch berührungslose Infrarotmessung oder mit Temperaturindikatorstreifen ermittelt werden kann) von mindestens 80°C, vorzugsweise mindestens 100 °C und besonders bevorzugt mindestens 120 °C, insbesondere bei PMT-Werten zwischen 120 und 300°C, bevorzugt zwischen 140 und 280 °C und besonders bevorzugt zwischen 150 und 260 °C , durchgeführt, wobei die Geschwindigkeit des Metallbands und damit die Verweilzeit im Trocknungsbereich der Bandbeschichtungsanlage in einer dem Fachmann bekannten Art und Weise solchermaßen eingestellt wird, daß ein bestimmter Restgehalt an flüchtigen Bestandteilen in der aus dem Primer (P) gebildeten Schicht nach Verlassen des Trocknungsbereich eingestellt werden kann.

Die Dicke der gemäß Verfahrensschritt (2) hergestellten getrockneten Schicht aus dem Primer (P) beträgt in der Regel zwischen 1 und 15 µm, bevorzugt zwischen 2 und 12 µm, besonders bevorzugt zwischen 3 und 10 µm.

Zwischen den Verfahrensschritten (2) und den im Coil-Beschichtungsverfahren folgenden Verfahrensschritten kann das mit der getrockneten Schicht aus Primer (P) versehene Metallband wieder aufgerollt und die weitere(n) Schicht(en) erst zu einem späteren Zeitpunkt aufgetragen werden.

In den folgenden Verfahrensschritten des Coil-Beschichtungsverfahrens wird auf die gemäß Verfahrensschritt (2) hergestellte getrocknete Schicht aus Primer (P) bevorzugt ein oder mehrere Decklack(e) (D) aufgetragen, wobei als Decklacke (D) prinzipiell alle für Metallbandbeschichtungen geeigneten Beschichtungsmittel geeignet sind.
Das Auftragen des Decklacks (D) kann durch Aufsprühen, Aufgießen oder vorzugsweise im oben beschriebenen Walzauftrag erfolgen. Vorzugsweise wird ein pigmentierter Decklack (D) mit hoher Flexibilität aufgetragen, der sowohl für die Farbgebung als auch für den Schutz gegen mechanische Belastung sowie gegen Witterungseinflüsse auf dem beschichteten Metallband sorgt. Solche Decklacke (D) werden beispielsweise in EP-A1-1 335 945 oder EP-A1-1 556 451 beschrieben. In einer weiteren bevorzugten Ausführungsform der Erfindung können die Decklacke (D) einen zweischichtigen Aufbau aus einer farbgebenden Basislackschicht und einer abschließenden Klarlackschicht aufweisen. Solche zweischichtigen für die Beschichtung von Metallbändern geeigneten Decklacksysteme werden beispielsweise in DE-A-100 59 853 und in WO-A-2005/016985 beschrieben.

In einem abschließenden Verfahrensschritt wird die in Verfahrensschritt (2) aufgetragene und getrocknete Schicht aus Primer (P) gemeinsam mit der im folgenden Verfahrensschritt (3) aufgebrachten Schicht aus Decklack (D) ausgehärtet, das heißt vernetzt, wobei die Restfeuchte aus der getrockneten Schicht aus Primer (P) sowie das Lösemittel aus dem Decklack (D) gemeinsam entfernt werden.
Die Vernetzung richtet sich nach der Natur der eingesetzten Bindemittel (BM) im Beschichtungsmittel (B) sowie der eingesetzten Bindemittel in der Decklackschicht (D) und erfolgt in der Regel thermisch, wobei das gemäß dem vorbeschriebenen Verfahren beschichtete Metallband mittels einer geeigneten Vorrichtung erwärmt. Die Erwärmung kann durch Bestrahlen mit naher oder ferner Infrarotstrahlung, bei geeigneten Metallsubstraten, insbesondere Eisen, durch elektrische Induktion und vorzugsweise durch Konvektionswärmeübertragung, erfolgen. Die Entfernung des Lösemittels kann auch durch Kontaktieren mit einem Gasstrom erfolgen, wobei eine Kombination mit der vorstehend beschriebenen Erwärmung möglich ist. Die zur Vernetzung erforderliche Temperatur richtet sich insbesondere nach den eingesetzten Bindemitteln im Primer (P) und in der Decklackschicht (D). Bevorzugt wird die Vernetzung bei auf dem Metall vorgefundenen Spitzentemperaturen (PMT) von mindestens 80°C, besonders bevorzugt mindestens 100 °C und ganz besonders bevorzugt mindestens 120 °C durchgeführt. Insbesondere wird die Vernetzung bei PMT-Werten zwischen 120 und 300°C, bevorzugt zwischen 140 und 280 °C und besonders bevorzugt zwischen 150 und 260 °C vorgenommen.

Dabei wird die Geschwindigkeit des Metallbands und damit die Verweilzeit im Ofenbereich der Bandbeschichtungsanlage in einer dem Fachmann bekannten Art und Weise vorzugsweise solchermaßen eingestellt, daß die Vernetzung in der aus dem Primer (P) gebildeten Schicht und in der aus dem Decklack (D) gebildeten Schicht nach Verlassen des Ofenbereichs weitgehend vollständig ist. Vorzugsweise liegt die Dauer für die Vernetzung bei 10 s bis 2 min. Werden beispielsweise Öfen mit Konvektionswärmeübertragung angewandt, so werden bei den bevorzugten Bandlaufgeschwindigkeiten Umluftöfen einer Länge von etwa 30 bis 50 m benötigt. Dabei liegt die Umlufttemperatur naturgemäß höher als die PMT und kann bis zu 350 °C betragen.

Die Dicke des solchermaßen hergestellten Schichtverbunds aus den auf dem Primer (P) und aus den auf dem Decklack (D) basierenden gehärteten Schichten beträgt in der Regel zwischen 2 und 60 µm, bevorzugt zwischen 4 und 50 µm, besonders bevorzugt zwischen 6 und 40 µm.

Die nach dem erfindungsgemäßen Verfahren hergestellten Schichtverbunde können insbesondere auf der Oberfläche von Eisen, Stahl, Zink oder Zinklegierungen, wie beispielsweise Zink-Aluminium-Legierungen, wie Galvalume ® und Galfan ®, oder Zink-Magnesium-Legierungen, Magnesium- oder Magnesiumlegierungen, Aluminium oder Aluminiumlegierungen aufgetragen werden.

Mit dem nach dem erfindungsgemäßen Verfahren hergestellten Schichtverbund versehene Metallbänder können, beispielsweise mittels Trennen, Umformen, Schweißen und/oder Fügen, zu metallischen Formteilen verarbeitet werden. Gegenstand der Erfindung sind daher auch Formkörper, welche mit den erfindungsgemäß herstellten Metallbändern hergestellt sind. Der Begriff "Formkörper" soll sowohl beschichtete Bleche, Folien oder Bänder als auch die daraus erhaltenen metallischen Bauteile umfassen.
Bei derartigen Bauteilen handelt es sich insbesondere um solche, die zur Verkleidung, Verblendung oder Auskleidung verwendet werden können. Beispiele umfassen Automobilkarosserien oder Teile davon, LKW-Aufbauten, Rahmen für Zweiräder, wie Motorräder oder Fahrräder, oder Teile für derartige Fahrzeuge, wie beispielsweise Schutzbleche oder Verkleidungen, Verkleidungen für Haushaltsgeräte, wie beispielsweise Waschmaschinen, Geschirrspülmaschinen, Wäschetrockner, Gas- und Elektroherde, Mikrowellengeräte, Tiefkühltruhen oder Kühlschränke, Verkleidungen für technische Geräte oder Einrichtungen, wie beispielsweise Maschinen, Schaltschränke, Computergehäuse oder dergleichen, Bauelemente im Architekturbereich, wie Wandteile, Fassadenelemente, Deckenelemente, Fenster- oder Türprofile oder Trennwände, Möbel aus metallischen Materialien, wie Metallschränke, Metallregale, Teile von Möbeln oder auch Beschläge. Weiterhin kann es sich bei den Bauteilen auch um Hohlkörper zur Lagerung von Flüssigkeiten oder anderen Stoffen handeln, wie beispielsweise um Dosen, Büchsen oder auch Tanks.

Die folgenden Beispiele sollen die Erfindung veranschaulichen.

### Beispiele

### Beispiel 1: Herstellung der phosphorhaltigen Polyester-Komponente A1 des erfindungsgemäßen Beschichtungsmittels

Eine Mischung aus 36,5 Gew.-Teilen Dicarbonsäuregemisch (Sokolan DCS, Hersteller Fa. BASF SE), 27,8 Gew.-Teilen Hexandiol und 35,6 Gew.-Teilen Cyclohexandimethanol wurde in einem mit einem Wasserabscheider ausgestatteten Rührkessel vorgelegt und unter Stickstoffatmosphäre unter Rühren auf 230 °C erhitzt. Das dabei freigesetzte Wasser wurde in einem Wasserabscheider aufgefangen. Die Reaktionsmischung wurde so lange bei 230 °C gehalten, bis die Säurezahl einen Wert von 4 mg KOH/g unterschreitet. Die resultierende Mischung wies einen Festkörperanteil von 90 % und eine Viskosität von 380 mPas (bei 50 °C) auf. Der resultierende Polyester 1 hatte eine Säurezahl von 2,2 mg KOH/g nach DIN 53402, eine OH-Zahl von 280 mg KOH /g nach DIN 53240 sowie ein zahlenmittleres Molekulargewicht Mn = 400 g/mol.
In einem Edelstahl-Rührkessel wurden 80,1 Gew.-Teile Polyester 1 auf 41 °C erhitzt und 19,9 Gew.-Teile Polyphosphorsäure 105 (Hersteller Fa. Thermphos) innerhalb von 1,25 h zugetropft, dabei erhöhte sich die Temperatur auf 46 °C. Bei 46 °C wurde die Mischung weitere 4 h gerührt.
Die resultierende Komponente A1 hatte eine Viskosität von 36 Pas, einen Festkörper von 93% und einen Phosphorgehalt von 6,6 Gew-%, bezogen auf A1.

### Beispiel 2: Herstellung des erfindungsgemäßen Beschichtungsmittels sowie einer Vergleichsprobe

Dem handelsüblichen Coil-Coating-Primer COILTEC® Top Universal P CF, enthaltend als Polyester-Bindemittel 24% Gew.-%, bezogen auf den Festkörper des Primers (P), eines Gemischs aus URALAC SN905 (Hersteller Fa. DSM) und Liquid Epoxy Araldite® GY 2600 (Hersteller Fa. Huntsman), 5 Gew.-% Melaminharz als Vernetzer, Farbpigmente und Korrosionsschutzmittel, wurde die phosphorhaltige Polyester-Komponente A1 in einer solchen Menge zugegeben, daß das resultierende erfindungsgemäße Beschichtungsmittel einen Phosphorgehalt von 0,6 Gew.-%, bezogen auf den Festkörper des Primers (P), aufwies.

Als Vergleichsprobe V1 wurde der unmodifizierte Coil-Coating-Primer COILTEC ® Top Universal P CF (Hersteller Fa. BASF Coatings GmbH) eingesetzt.

### Beispiel 3: Herstellung und Prüfung der erfindungsgemäßen Primer- und folgender Decklack-Beschichtungen

Als Substrate wurden entfettete, nicht vorbehandelte Stahlbleche aus Stahl der Sorte Z (OEHDG 4, Hersteller Fa. Chemetall) verwendet. Der Beschichtungsstoff gemäß Beispiel 2 sowie die Vergleichsprobe V1 wurden auf die Substrate mit Stabrakeln in einer Nassschichtdicke appliziert, daß nach einer Härtung in einem Umlauftrockner bei einer Umlufttemperatur von 365 °C und einer Objekttemperatur von 243 °C eine Trockenschichtdicke von 5 µm resultierte.

Hiernach wurden die Primer-Beschichtungen mit einem handelsüblichen Coil-Coating-Decklack (Polyceram ® PlusP, Hersteller BASF Coatings GmbH) auf der Basis Polyester/Melaminharz solchermaßen überschichtet, daß nach einer Härtung in einem Umlauftrockner bei einer Umlufttemperatur von 365 °C und einer Objekttemperatur von 243 °C eine Trockenschichtdicke von 20 µm resultierte. Es resultieren die Beschichtungen HB1 sowie VB1 (vorbehandlungsfreie Kombination aus handelsüblichem Coil-Coating-Primer und handelsüblichem Coil-Coating-Decklack). In einem weiteren Vergleichsversuch wurde eine Beschichtung VB2 aus der Kombination aus handelsüblichem Coil-Coating-Primer und handelsüblichem Coil-Coating-Decklack auf einem mit einem handelsüblichen Vorbehandlungsmittel (Gardobond TP 10475, Hersteller Fa. Chemetall GmbH) beschichteten Blech erzeugt.

### Prüfung der Aufbauten aus Coil-Coating-Primer- und Coil-Coating-Decklack-Beschichtungen:

Folgende Prüfungen wurden an den resultierenden Schichtaufbauten durchgeführt:
Tape-Test: Die Bestimmung der Haftung des Schichtverbunds aus Coil-Coating-Primer und Coil-Coating-Decklack auf dem Substrat erfolgte gemäß DIN EN ISO 13523-7.
Korrosions-Test (K-Test): Um die korrosionsinhibierende Wirkung der Primer-Beschichtungen zu prüfen wurden die Beschichtungen angeritzt und dem Salzsprühtest für 360 h unterzogen. Dabei wurden nach Beendigung der Korrosionsbelastung die Tafeln visuell begutachtet. Es wurde die Unterwanderung am Ritz in mm gemäß DIN EN 13523 bzw. DIN EN ISO 9227 ermittelt.
T-Bend-Test: Wurde zur Bestimmung der Flexibilität des Schichtverbunds aus Coil-Coating-Primer und Coil-Coating-Decklack gemäß DIN EN 13523-7 durchgeführt.

Ergebnisse der Prüfung der Aufbauten aus Coil-Coating-Primer- und Coil-Coating-Decklack-Beschichtungen:

| Aufbau | HB1 | VB1 | VB2 |
|---|---|---|---|
| K-Test (mm) | 0,0 | 5,0 | 0,5 |
| T-Bend-Test | 2,5 | 2,5 | 2,5 |
| Tape-Test | 1,5 | 1,75 | 0,0 |

## Patentansprüche

1. Verfahren zur korrosionshemmenden Beschichtung von Metalloberflächen, **dadurch gekennzeichnet daß**
(1) in einem ersten Schritt die Metalloberfläche gereinigt und gegebenenfalls mit einem Vorbehandlungsmittel behandelt wird und
(2) in einem zweiten Schritt die gemäß Schritt (1) gereinigte und gegebenenfalls vorbehandelte Metalloberfläche mit einem Primer (P) beschichtet wird, enthaltend mindestens ein Bindemittel (BM) und mindestens ein Vernetzungsmittel (V), sowie mindestens eine phosphorhaltige Polyester-Komponente (A), wobei (A) ein saures Veresterungsprodukt von Phosphonsäure, von Monophosphorsäure und/oder von Polyphosphorsäure, beziehungsweise von deren Anhydriden und/oder von deren Estern, mit mindestens einem Polyester (B), der mindestens zwei Hydroxylgruppen aufweist, ist, und die Trocknung und/oder Aushärtung des Primers bei auf dem Metall vorgefundenen Spitzentemperaturen (Peak metal temperature (PMT)) von mindestens 80°C durchgeführt wird.

2. Verfahren nach Anspruch 1, **dadurch gekennzeichnet, daß** der Polyester (B) aliphatische Dicarbonsäuren und aliphatische Dialkohole als Molekülbausteine enthält.

3. Verfahren nach einem der Ansprüche 1 oder 2, **dadurch gekennzeichnet, daß** der Polyester (B) als Molekülbausteine Dicarbonsäuren enthält, welche an der längsten Kohlenstoffkette eine Carboxylgruppe in α-Stellung und eine Carboxylgruppe in ω-Stellung aufweisen.

4. Verfahren nach einem der Ansprüche 1 bis 3, **dadurch gekennzeichnet, daß** der Polyester (B) als Molekülbausteine Dialkohole enthält, welche an der längsten Kohlenstoffkette eine Hydroxylgruppe in α-Stellung und eine Hydroxylgruppe in ω-Stellung aufweisen.

5. Verfahren nach einem der Ansprüche 1 bis 4, **dadurch gekennzeichnet, daß** der Polyester (B) eine OH-Zahl nach DIN 53240 von 50 bis 500 mg KOH/g und/oder eine Säurezahl nach DIN 53402 von weniger als 20 mg KOH/g aufweist.

6. Verfahren nach einem der Ansprüche 1 bis 5, **dadurch gekennzeichnet, daß** das Vernetzungsmittel (V) mindestens eine Melamin-Verbindung enthält.

7. Verfahren nach einem der Ansprüche 1 bis 6, **dadurch gekennzeichnet, daß** der Primer (P) in einer solchen Nassschichtdicke appliziert wird, daß nach der Härtung eine Trockenschichtdicke von 1 µm bis 15 µm resultiert.

8. Verfahren zur Beschichtung von Metallbändern, **dadurch gekennzeichnet, daß** es folgende Verfahrensschritte umfasst:
(a) Aufbringen des Primers (P) nach dem Verfahren gemäß einem der Ansprüche 1 bis 7 auf die gereinigte und gegebenenfalls vorbehandelte Metalloberfläche,
(b) gegebenenfalls Trocknung und/oder Aushärtung der aus dem Primer (P) gebildeten Schicht,
(c) Auftrag einer Decklackschicht (D) auf die gegebenenfalls gemäß Schritt (b) getrocknete und/oder ausgehärtete Primerschicht und
(d) gemeinsame Aushärtung der Schichten aus Primer (P) und Decklack (D).

9. Verfahren nach Anspruch 8, **dadurch gekennzeichnet, dass** die gemeinsame Aushärtung der Schichten aus Primer (P) und Decklack (D) gemäß Schritt (d) des Verfahrens bei Peak-Metal-Temperaturen (PMT) zwischen 150 und 280 °C durchgeführt wird.

10. Verfahren nach einem der Ansprüche 1 bis 9, **dadurch gekennzeichnet, daß** das zu beschichtende Metallsubstrat ausgewählt ist aus der Gruppe, Eisen, Stahl, Zink oder Zinklegierungen, Magnesium oder Magnesiumlegierungen, Aluminium oder Aluminiumlegierungen.

## Claims

1. Method for the corrosion-inhibiting coating of metal surfaces, **characterized in that**
(1) in a first step, the metal surface is cleaned and optionally treated with a pretreatment composition, and
(2) in a second step, the metal surface cleaned and optionally pretreated in step (1) is coated with a primer (P) comprising at least one binder (BM) and at least one crosslinking agent (V), and also at least one phosphorus-containing polyester component (A), wherein (A) is an acidic esterification product of phosphonic acid, of monophosphoric acid and/or of polyphosphoric acid, and/or of the anhydrides thereof and/or of the esters thereof, with at least one polyester (B) which contains at least two hydroxyl groups, and the drying and/or curing of the primer is carried out at peak temperatures (peak metal temperature (PMT)), found beforehand on the metal, of at least 80°C.

2. Method according to Claim 1, **characterized in that** the polyester (B) comprises aliphatic dicarboxylic acids and aliphatic dialcohols as molecular units.

3. Method according to either of Claims 1 and 2, **characterized in that** the polyester (B) comprises as molecular units dicarboxylic acids which on the longest carbon chain contain a carboxyl group in a position and a carboxyl group in ω position.

4. Method according to any of Claims 1 to 3, **characterized in that** the polyester (B) comprises as molecular units dialcohols which on the longest carbon chain contain a hydroxyl group in a position and a hydroxyl group in w position.

5. Method according to any of Claims 1 to 4, **characterized in that** the polyester (B) has an OH number to DIN 53240 of 50 to 500 mg KOH/g and/or an acid number to DIN 53402 of less than 20 mg KOH/g.

6. Method according to any of Claims 1 to 5, **characterized in that** the crosslinking agent (V) comprises at least one melamine compound.

7. Method according to any of Claims 1 to 6, **characterized in that** the primer (P) is applied at a wet film thickness such that curing results in a dry film thickness of 1 µm to 15 µm.

8. Method for coating metal coils, **characterized in that** it comprises the following steps:
(a) applying the primer (P) by the method according to any of Claims 1 to 7 to the cleaned and optionally pretreated metal surface,
(b) optionally drying and/or curing the film formed from the primer (P),
(c) applying a topcoat film (D) to the primer layer optionally dried and/or cured in step (b), and
(d) jointly curing the films of primer (P) and topcoat (D).

9. Method according to Claim 8, **characterized in that** the joint curing of the films of primer (P) and topcoat (D) in step (d) of the method is carried out at peak metal temperatures (PMT) between 150 and 280°C.

10. Method according to any of Claims 1 to 9, **characterized in that** the metal substrate to be coated is selected from the group consisting of iron, steel, zinc, zinc alloys, magnesium, magnesium alloys, aluminum, and aluminum alloys.

## Revendications

1. Procédé pour le revêtement inhibiteur de la corrosion de surfaces métalliques, **caractérisé en ce que**
(1) dans une première étape, la surface métallique est nettoyée et le cas échéant traitée par un agent de prétraitement et
(2) dans une deuxième étape, la surface métallique nettoyée et le cas échéant prétraitée selon l'étape (1) est revêtue d'un apprêt (P), contenant au moins un agent liant (BM) et au moins un réticulant (V) ainsi qu'au moins un composant de polyester contenant du phosphore (A), (A) étant un produit d'estérification acide de l'acide phosphonique, de l'acide monophosphorique et/ou de l'acide polyphosphorique, ou, selon le cas, de leurs anhydrides et/ou de leurs esters, par au moins un polyester (B) qui présente au moins deux groupes hydroxyle, et le séchage et/ou le durcissement de l'apprêt est réalisé à une température de pic (Peak métal température (PMT) - température pic-métal) trouvée au préalable sur le métal d'au moins 80°C.

2. Procédé selon la revendication 1, **caractérisé en ce que** le polyester (B) contient des acides dicarboxyliques aliphatiques et des dialcools aliphatiques comme éléments moléculaires.

3. Procédé selon l'une quelconque des revendications 1 ou 2, **caractérisé en ce que** le polyester (B) contient comme éléments moléculaires des acides dicarboxyliques qui présentent, au niveau de la chaîne carbonée la plus longue, un groupe carboxyle en position α et un groupe carboxyle en position ω.

4. Procédé selon l'une quelconque des revendications 1 à 3, **caractérisé en ce que** le polyester (B) contient comme éléments moléculaires des dialcools qui présentent, au niveau de la chaîne carbonée la plus longue, un groupe hydroxyle en position α et un groupe hydroxyle en position ω.

5. Procédé selon l'une quelconque des revendications 1 à 4, **caractérisé en ce que** le polyester (B) présente un indice OH selon la norme DIN 53240 de 50 à 500 mg de KOH/g et/ou un indice d'acide selon la norme DIN 53402 inférieur à 20 mg de KOH/g.

6. Procédé selon l'une quelconque des revendications 1 à 5, **caractérisé en ce que** le réticulant (V) contient au moins un composé de mélamine.

7. Procédé selon l'une quelconque des revendications 1 à 6, **caractérisé en ce que** l'apprêt (P) est appliqué en une épaisseur de couche humide telle qu'il en résulte, après le durcissement, une épaisseur de couche sèche de 1 µm à 15 µm.

8. Procédé pour le revêtement de bandes métalliques, **caractérisé en ce qu'**il comprend les étapes de procédé suivantes :
(a) application de l'apprêt (P) selon le procédé selon l'une quelconque des revendications 1 à 7 sur la surface métallique nettoyée et le cas échéant prétraitée,
(b) le cas échéant séchage et/ou durcissement de la couche formée à partir de l'apprêt (P),
(c) application d'une couche de laque de recouvrement (D) sur la couche d'apprêt le cas échéant séchée et/ou durcie selon l'étape (b) et
(d) durcissement commun des couches d'apprêt (P) et de laque de recouvrement (D).

9. Procédé selon la revendication 8, **caractérisé en ce que** le durcissement commun des couches d'apprêt (P) et de laque de recouvrement (D) selon l'étape (d) du procédé est réalisé à des températures pic-métal (PMT) entre 150 et 280°C.

10. Procédé selon l'une quelconque des revendications 1 à 9, **caractérisé en ce que** le substrat métallique à revêtir est choisi dans le groupe formé par le fer, l'acier, le zinc ou les alliages de zinc, le magnésium ou les alliages de magnésium, l'aluminium ou les alliages d'aluminium.
